# FASCICULE DE BREVET EUROPEEN

(11) **EP 3 479 088 B1**
(45) Date de publication et mention de la délivrance du brevet: **24.04.2024**
(21) Numéro de dépôt: 17740457.1
(22) Date de dépôt: 29.06.2017
(51) Int. Cl.: G01K 7/02

(54) **THERMOCOUPLE AVEC PROTECTION DE LA JONCTION CHAUDE ET PROCÉDÉ DE FABRICATION**
THERMOELEMENT MIT EINER GESCHÜTZTEN MESSSTELLE UND METHODE ZUR HERSTELLUNG
THERMOCOUPLE HAVING A PROTECTED HOT JUNCTION AND METHOD OF MANUFACTURING

(30) Priorité: 30.06.2016 FR 1656276
(43) Date de publication de la demande: 08.05.2019
(73) Titulaire: SC2N, 94046 Creteil Cedex (FR)
(72) Inventeur: KOPP, Gabriel, 14125 Mondeville (FR); SFAXI, Mahmoud, 14125 Mondeville (FR); GUIBET, Vincent, 14125 Mondeville (FR)
(74) Mandataire: Valeo Powertrain Systems
(86) Numéro de dépôt international: PCT/FR2017/051758
(87) Numéro de publication internationale: WO 2018/002546

(56) Documents cités:
- WO-A1-2016/009839
- FR-A1- 3 028 614

## Description

La présente invention concerne un capteur de température, notamment pour mesurer des températures élevées, par exemple supérieures à 900°C, voire à 1000°C, et son procédé de fabrication.

L'invention s'applique en particulier aux capteurs de température adaptés pour mesurer la température des gaz d'échappement de véhicules automobiles.

Aussi il peuvent être utilisés dans des systèmes de recirculation des gaz d'échappement EGR (« Exhaust Gas Recirculation »).

Ces capteurs peuvent comprendre un thermocouple pour mesurer les hautes températures.

Les thermocouples fournissent une précision de mesure relativement élevée et une dynamique élevée exprimée par le temps de réponse du capteur. C'est pourquoi ils sont utilisés dans ce domaine ayant des exigences élevées en termes de contrôle d'émissions de polluants.

Le principe de mesure des thermocouples est basé sur l'effet Seebeck qui se traduit par une différence de potentiel entre deux fils de métaux différents lorsqu'ils sont soumis à une différence de température.

Les deux fils de métaux sont soudés entre eux à une première extrémité formant une soudure chaude (ou point chaud) destinée à mesurer la température T1 du milieu à mesurer, comme par exemple la température des gaz d'échappement d'un système d'échappement.

Les deux fils métalliques du thermocouple comportent également chacun une deuxième extrémité reliée chacune à un voltmètre par une jonction froide (ou point froid) qui est à une température de référence T0.

Le signal de tension mesuré par le voltmètre entre les deuxièmes extrémités des fils métalliques est transmis vers l'extérieur à un circuit électrique / électronique d'exploitation d'un signal de mesure via des fils électriques.

La variation de tension entre les deux fils métalliques du thermocouple est proportionnelle à la variation de température entre la soudure chaude qui est à la température T1 et les deuxièmes extrémités des fils métalliques qui sont à une température de référence T0.

En connaissant la température de référence T0 du point froid et la tension entre les deuxièmes extrémités des fils métalliques, il est possible de déduire la température T1 du point chaud. FR 3 028 614 A1 et WO 2016/009839 A1 concernent des thermocouples utilisés dans des applications automobiles.

Dans les capteurs de température de l'art antérieur, les deux fils métalliques du thermocouple sont entourés par une gaine isolante comprenant un coeur minéral entouré par une enveloppe métallique.

La gaine isolante comprend une enveloppe métallique entourant un coeur minéral constitué d'un matériau minéral isolant tel de la magnésie, par exemple.

Pour répondre aux contraintes de précisons et de dynamique du capteur de température, il existe deux configurations de capteur connues.

La première configuration est basée sur l'utilisation d'une gaine isolante minérale MIC (Mineral Insulation Cable) de diamètre réduit, de l'ordre de 3 mm à 4 mm.

Cependant, cette configuration ne répond pas aux contraintes générées par l'environnement moteur tel que les vibrations. L'extrémité fermée de la gaine isolante est immergée dans le système d'échappement et subit des sollicitations mécaniques et thermiques très fortes. L'accélération lors des vibrations peut atteindre 400 m/s² et la température peut atteindre 1200°C. Le gradient thermique peut être de l'ordre de 1500°C/s.

Ces contraintes mécaniques et thermiques sont susceptibles de fragiliser la gaine isolante et d'entrainer un disfonctionnement du capteur de température.

Le faible diamètre de cette gaine isolante impose alors l'ajout de tubes de renfort pour supporter les vibrations.

La deuxième configuration est basée sur une gaine isolante minérale MIC de diamètre important de l'ordre de 6 mm. Un retreint est alors appliqué sur cette gaine isolante minérale dans la zone de la jonction chaude afin de respecter un temps de réponse court.

Ce procédé de fabrication est cependant difficile à automatiser et implique actuellement des opérations manuelles délicates.

L'invention a donc pour objectif de pallier ces inconvénients de l'art antérieur en proposant un capteur de température à la fois robuste, précis, ayant un temps de réponse court et plus simple à mettre en oeuvre que ceux de l'art antérieur.

L'invention concerne un capteur de température pour véhicule automobile selon la revendication 1 et un procédé de fabrication dudit capteur.

L'invention fournit ainsi un capteur de température destiné à mesurer des températures supérieures à 900°C plus robuste, permettant de résister à des contraintes sévères de vibrations et de températures, précis, ayant un temps de réponse court (dynamique élevée) et plus simple à mettre en oeuvre que ceux de l'art antérieur.

L'invention permet en particulier d'utiliser des gaines isolantes de grand diamètre, d'au moins 6 mm, permettant d'assurer une grande résistance aux vibrations, sans avoir recourt à des tubes de renfort autour de la gaine isolante ou à une opération de rétreint dans la zone de la soudure chaude.

Le thermocouple peut en outre comprendre une ou plusieurs caractéristiques suivantes, prises séparément ou en combinaison.

Selon l'invention, la distance d entre les deux fils métalliques de la deuxième portion de thermocouple est comprise entre 1 mm et 2 mm.

Cet écartement est suffisant pour garantir l'isolation entre les deux fils métalliques mais également assez faible pour obtenir un temps de réponse élevé.

Selon l'invention, la deuxième portion de thermocouple s'étend sur une longueur comprise entre 6 mm et 10 mm.

Selon un autre mode de réalisation possible, la partie d'extrémité rétrécie de la deuxième portion de thermocouple s'étend sur une longueur supérieure ou égale à 4 mm.

Ceci permet de garantir la répétabilité du temps de réponse du thermocouple.

Selon l'invention, le capuchon comprend :
- une première portion tubulaire entourant la partie d'extrémité rétrécie de la deuxième portion de thermocouple et comprenant une première extrémité fermée en regard de la première extrémité des fils métalliques du thermocouple,
- une deuxième portion comportant une première partie entourant la gaine isolante reliée perpendiculairement à une deuxième partie faisant butée sur l'extrémité avant de la gaine isolante, et
- une troisième portion de forme tronconique reliant la première portion tubulaire à la deuxième partie de la deuxième portion, la deuxième partie présentant une forme de disque muni d'un orifice en son centre.

Selon un autre mode de réalisation possible, la première portion tubulaire du capuchon présente un diamètre d' qui est inférieur au diamètre de la deuxième portion du capuchon.

Le capuchon épouse ainsi la forme des fils métalliques de la deuxième portion de thermocouple afin que la paroi du capuchon soit la plus proche possible des fils métalliques pour réduire le temps de réponse du capteur.

Selon un autre mode de réalisation possible, le diamètre d' de la première portion tubulaire du capuchon est d'environ 2,6 mm. La distance entre les fils métalliques et le capuchon est supérieure ou égale à 0,5 mm.

Ces distances d" et d‴ garantissent une distance suffisante entre les fils métalliques et la paroi et fond du capuchon pour assurer l'isolation électrique.

L'invention concerne également un procédé de fabrication d'un capteur de température pour véhicule automobile tel que défini précédemment.

Le procédé comprend une étape de fourniture d'un thermocouple comportant deux fils métalliques ayant deux premières extrémités. Le thermocouple comporte une première portion de thermocouple dans laquelle une gaine isolante entoure les fils métalliques. Les deux fils métalliques sont séparés d'une distance D à l'intérieur de la première portion de thermocouple.

Selon l'invention, le procédé comprend les étapes suivantes:
- obtention d'une deuxième portion de thermocouple non recouverte par la gaine isolante s'étendant de la première extrémité des fils métalliques du thermocouple jusqu'à une extrémité avant de la gaine isolante,
- réduction de l'écartement entre les deux fils métalliques de façon à former, dans la deuxième portion de thermocouple, une partie d'extrémité rétrécie dans laquelle les deux fils métalliques sont séparés d'une distance d qui est inférieure à la distance D séparant les fils métalliques de la première portion de thermocouple,
- soudure des deux premières extrémités des fils métalliques formant une soudure chaude pour mesurer une température T1 dans le véhicule automobile, et
- fermeture de la deuxième portion de thermocouple par un capuchon pour protéger la soudure chaude.

Le procédé de l'invention permet de fabriquer un capteur de température destiné à mesurer des températures supérieures à 900°C à la fois plus robuste, permettant de résister à des contraintes sévères de vibrations et de températures, précis, ayant un temps de réponse court et surtout plus simple à mettre en oeuvre que ceux de l'art antérieur.

En particulier, contrairement aux procédés de l'art antérieur, il n'est plus nécessaire d'appliquer un rétreint au niveau de la soudure chaude, difficile à réaliser et générant un surcoût de fabrication. Le procédé peut être automatisé, réduisant le temps de fabrication et les coûts.

Le procédé de fabrication peut en outre comprendre une ou plusieurs étapes suivantes, prises séparément ou en combinaison.

Lors de l'étape d'obtention d'une deuxième portion de thermocouple non recouverte par la gaine isolante, une portion de gaine isolante recouvrant initialement les fils métalliques du thermocouple est retirée sur une longueur correspondant à la deuxième portion de thermocouple.

Selon un autre mode de réalisation, la gaine isolante comprenant un coeur minéral entouré d'une enveloppe métallique, le procédé de fermeture de la deuxième portion de thermocouple par un capuchon comprend une étape de soudure du capuchon sur l'enveloppe métallique de la gaine isolante.

Les caractéristiques de l'invention seront décrites plus en détail en se référant aux dessins annexés dans lesquels :
- la figure 1 représente une coupe longitudinale d'un capteur de température selon l'invention montrant une deuxième portion de thermocouple non recouverte par la gaine isolante ;
- la figure 2 représente une coupe longitudinale de ce capteur de température montrant une partie d'extrémité rétrécie dans cette deuxième portion de thermocouple ;
- la figure 3 représente une coupe longitudinale de ce capteur de température montrant cette deuxième portion de thermocouple recouverte d'un capuchon.

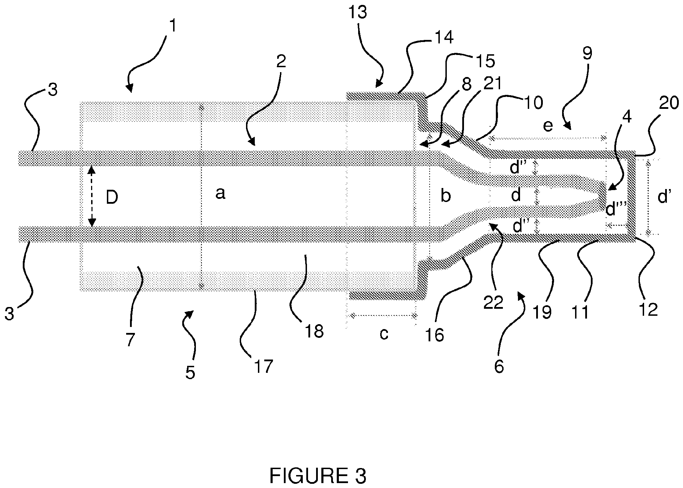

La figure 3 représente une vue en coupe longitudinale d'une partie d'un capteur de température 1 pour véhicule automobile selon l'invention.

Ce capteur de température 1 comprend un thermocouple 2 comportant deux fils métalliques 3 soudés entre eux à une première extrémité 4 formant une soudure chaude pour mesurer une température T1 dans le moteur d'un véhicule automobile.

Les deux fils métalliques 3 comportent chacun une deuxième extrémité connectée électriquement à un dispositif électronique (non représenté).

La température T1 correspond à la température du milieu à mesurer dans le moteur. Les fils métalliques 3 sont constitués de deux métaux différents, comme par exemple un couple de métaux Nisil/Nicrosil pour le thermocouple de type N. Le thermocouple 2 est de type J, K, T, R, S, N, par exemple.

La deuxième extrémité des deux fils métalliques est connectée électriquement à un voltmètre mesurant la tension entre les deux deuxièmes extrémités.

En connaissant la température de référence T0 à un point froid distant du point chaud, et la tension aux deuxièmes extrémités des fils métalliques du thermocouple, on en déduit la température T1 de la soudure chaude ou point chaud qui correspond à la température du milieu à mesurer dans le moteur du véhicule.

Le capteur de température 1 comprend une première portion de thermocouple 5 dans laquelle une gaine isolante 7 entoure les fils métalliques 3 du thermocouple. Les deux fils métalliques 3 de la première portion de thermocouple 5 sont séparés d'une distance D qui peut être d'environ 2,4 mm environ.

Dans le cadre de l'invention la gaine isolante (ou MIC pour Mineral Insulated Cable selon la terminologie anglaise) est constituée
- d'une gaine métallique 17 par exemple en Inconal600, 601 ou 310S,
- d'une poudre isolante à base d'oxyde de magnésium ou d'aluminium ; cette poudre est compactée lors de l'opération de laminage qui produit le MIC
- de deux conducteurs thermocouple de type N, K, R, ...

La gaine isolante 7 comprend également une extrémité arrière (non représentée) par laquelle ressortent les deux fils métalliques 3 du thermocouple 2 pour se connecter au connecteur électrique.

La gaine isolante 7 comprend une extrémité avant 8 délimitant la première portion de thermocouple 5 du côté de la première extrémité 4 des fils métalliques 3.

La gaine isolante 7 entoure les deux fils métalliques 3 depuis cette extrémité avant 8 jusqu'à son extrémité arrière située au voisinage du dispositif électronique ou d'un faisceau s'y raccordant.

Les deux fils métalliques 3 sont entourés et maintenus dans la gaine isolante 7 de sorte que les deux fils métalliques 3 soient isolés entre eux et maintenus par la gaine isolante 7.

La gaine isolante 7 est par exemple de forme générale allongée selon une direction longitudinale correspondant à la direction longitudinale des deux fils métalliques 3. Cette gaine isolante 7 peut présenter une forme générale cylindrique. À titre d'exemple, la gaine isolante 7 présente un coeur minéral 18 en matière céramique, telle que l'oxyde de magnésium MgO ou l'oxyde d'aluminium Al2O3, électriquement isolant et résistante à la chaleur, qui est entouré par une enveloppe métallique 17 en acier inoxydable réfractaire résistant à des températures élevées, tel qu'un alliage de chrome, de nickel et de fer du type AISI 310S ou un superalliage de type Inconel600^{®} ou Inconel601^{®} (marques déposées). L'enveloppe métallique 17 peut être en acier inoxydable à faible taux de carbone pour faciliter la soudure sur le MIC et de type AISI 304L par exemple. Le coeur minéral 18 de la gaine isolante 7 peut être en magnésie ou alumine, par exemple.

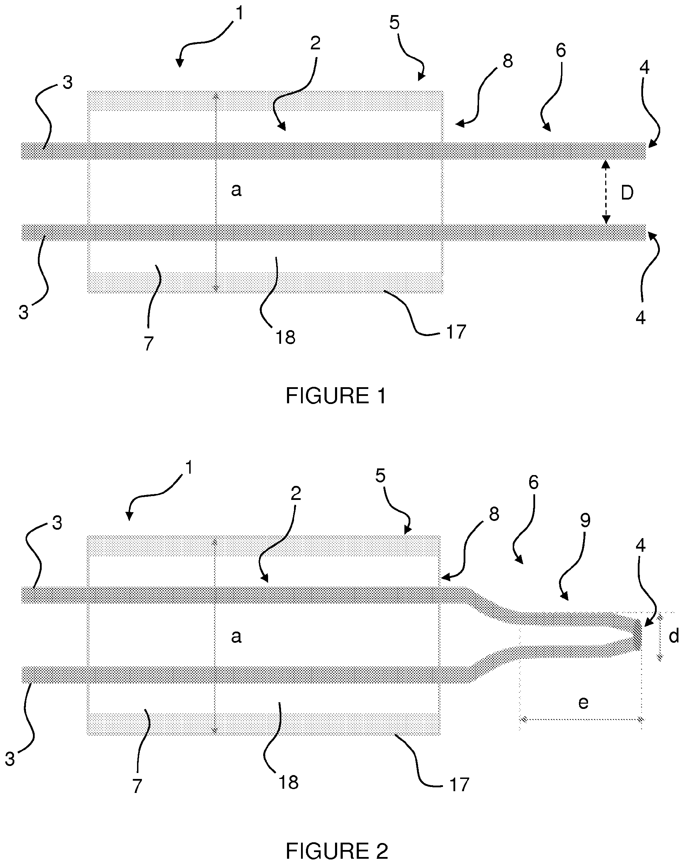

Selon l'invention et comme illustré sur les figures 1 à 3, le capteur de température 1 comprend une deuxième portion de thermocouple 6 non recouverte par la gaine isolante 7 s'étendant de la première extrémité 4 des fils métalliques 3 du thermocouple 2 jusqu'à l'extrémité avant 8 de la gaine isolante 7 ou autrement dit jusqu'à la première portion de thermocouple 5.

Les deux fils métalliques 3 du thermocouple 2 sont en effet dénudés dans cette deuxième portion de thermocouple 6.

Comme représenté sur les figures 2 et 3, la deuxième portion de thermocouple 6 comprend une partie d'extrémité rétrécie 9 dans laquelle les deux fils métalliques 3 de la deuxième portion de thermocouple 6 sont séparés d'une distance d qui est inférieure à la distance D séparant les fils métalliques 3 de la première portion de thermocouple 5.

Autrement dit, la distance ou écartement entre les deux fils métalliques 3 a été réduit au voisinage des premières extrémités 4 des deux fils métalliques 3.

L'écartement doit être suffisant pour garantir l'isolation entre les deux fils métalliques 3 mais également assez faible pour obtenir un temps de réponse le plus petit possible.

La distance d entre les deux fils métalliques 3 de la deuxième portion de thermocouple 6 est comprise entre 1 mm et 2 mm.

Avantageusement, l'entraxe ou distance D entre les fils métalliques 3 du thermocouple 2 dans la première portion de thermocouple 5 est suffisamment important pour, d'une part, permettre de passer un outillage de conformage des fils métalliques 3 côté jonction chaude et d'autre part, permettre une soudure électrique avec le câble électrique positionné du côté opposé à la jonction chaude sans opération d'écartement additionnelle.

Pour cela, une distance D d'environ 2,4 mm est idéale.

La deuxième portion de thermocouple 6 s'étend sur une longueur comprise entre 6 mm et 10 mm.

La partie d'extrémité rétrécie 9 de la deuxième portion de thermocouple 6 s'étend sur une longueur e supérieure ou égale à 2 mm permettant d'obtenir un temps de réponse court.

Comme représenté sur la figure 3, le capteur de température 1 comprend un capuchon 10 entourant la deuxième portion de thermocouple 6 pour la protéger.

Le capuchon 10 permet de fermer la deuxième portion de thermocouple 6 et de protéger la soudure chaude.

Le capuchon 10 est de préférence en métal du type acier inoxydable réfractaire haute température ou en matériau choisi parmi la famille des superalliages haute température tel que les Inconel600 ou Inconel601

Le capuchon 10 est obtenu de préférence par emboutissage.

Le capuchon 10 comprend une première portion tubulaire 11 entourant la partie d'extrémité rétrécie 9 de la deuxième portion de thermocouple 6. La première portion tubulaire 11 comprend une première extrémité fermée 12 en regard de la première extrémité 4 des fils métalliques 3 du thermocouple 2 formant la jonction chaude.

Le capuchon 10 comprend également une deuxième portion 13 comportant une première partie 14 entourant la gaine isolante 7. La première partie 14 présente une forme cylindrique.

La deuxième portion 13 est reliée perpendiculairement à une deuxième partie 15 faisant butée sur l'extrémité avant 8 de la gaine isolante 7. La deuxième partie 15 de la deuxième portion 13 du capuchon 10 prolonge la première partie 14 en direction du coeur minéral 18 de la gaine isolante 7. Cette deuxième partie 15 présente une forme de disque muni d'un orifice en son centre.

La première partie 14 de la deuxième portion 13 du capuchon 10 est soudée, de préférence par laser, à l'enveloppe métallique 17 de la gaine isolante 7.

Cette deuxième partie 15 permet de créer une butée d'assemblage et de la même occasion de garantir une distance maitrisable et répétable d'une pièce à l'autre entre la jonction chaude et le fond 20 du capuchon 10.

Le capuchon 10 comprend aussi une troisième portion 16 de forme tronconique reliant la première portion tubulaire 11 à la deuxième portion 13 du capuchon 10 ou plus précisément à la deuxième partie 15 de la deuxième portion 13.

Les fils métalliques 3 du thermocouple 2 à l'intérieur de la partie d'extrémité rétrécie 9 de la deuxième portion de thermocouple 6 sont séparés de la distance d. La distance entre les fils métalliques 3 augmente progressivement au fur et à mesure qu'ils rejoignent les fils métalliques 3 à l'intérieur de la première portion de thermocouple 5.

Les fils métalliques 3 du thermocouple 2 de la deuxième portion de thermocouple 6 présentent une forme générale triangulaire. Le capuchon 10 tend à épouser cette forme afin que la paroi du capuchon 10 soit la plus proche possible des fils métalliques 3.

Dans une autre variante, le capuchon présente une forme cylindrique.

Le diamètre d' de la première portion tubulaire 11 du capuchon 10 est inférieur au diamètre de la deuxième portion 13 du capuchon 10.

Le diamètre d' de la première portion tubulaire 11 du capuchon 10 est d'environ 2,6 mm. Le diamètre d'est réduit dans la zone de la jonction chaude pour garantir un temps de réponse du thermocouple 2 court.

La distance d" entre les fils métalliques 3 et la paroi latérale 19 de la première portion tubulaire 11 du capuchon 10 est supérieure ou égale à 0,5 mm.

La distance d‴ entre les fils métalliques 3 et le fond 20 de la première portion tubulaire 11 du capuchon 10 est supérieure ou égale à 0,5 mm.

Ces distances d" et d‴ garantissent une distance suffisante entre les fils métalliques 3 et la paroi 19 et fond 20 du capuchon 10.

La partie d'extrémité rétrécie 9 de la deuxième portion de thermocouple 6 présente une longueur e qui est suffisante pour garantir la répétabilité du temps de réponse. La longueur e est supérieure ou égale à 2 mm.

La première partie 14 de la deuxième portion 13 du capuchon 10 présente une longueur c supérieure ou égale à 1,5 mm qui doit être suffisante pour guider le capuchon 10 sur la gaine isolante 7, garantissant une meilleure coaxialité avec les fils métalliques 3 du thermocouple 2.

La troisième portion 16 du capuchon 10 comprend une partie arrière de grande section 21 de diamètre b qui est supérieure ou égale à 2,6 mm. Cette partie arrière de grande section 21 est reliée à la deuxième partie 15 de la deuxième portion 13.

La troisième portion 16 du capuchon 10 comprend une partie avant de petite section 22 de diamètre d' qui est inférieure au diamètre b. Cette partie avant de petite section 22 est reliée à la première portion tubulaire 11 du capuchon 10.

Avantageusement, les fils métalliques 3 du thermocouple 2 auront un diamètre suffisamment faible pour entrer dans un diamètre interne de capuchon 10 d'environ 2.6 mm tout en assurant un jeu de 0,5 mm avec les parois de ce capuchon 10. Par exemple, les fils métalliques 3 du thermocouple 2 peuvent présenter un diamètre compris entre 0,3 mm et 0,6 mm, plus précisément un diamètre compris entre 0,45mm +/- 0,15.

L'invention concerne également un procédé de fabrication d'un capteur de température 1 pour véhicule automobile tel que défini précédemment comprenant une étape de fourniture d'un thermocouple 2 comportant deux fils métalliques 3 ayant deux premières extrémités 4.

Le thermocouple 2 comporte une première portion de thermocouple 5 dans laquelle une gaine isolante 7 entoure les fils métalliques 3. Les deux fils métalliques 3 sont séparés d'une distance D à l'intérieur de la première portion de thermocouple 5.

Selon l'invention, le procédé de fabrication comprend une étape d'obtention d'une deuxième portion de thermocouple 6 non recouverte par la gaine isolante 7 s'étendant de la première extrémité 4 des fils métalliques 3 du thermocouple 2 jusqu'à une extrémité avant 8 de la gaine isolante 7.

De préférence, initialement, la gaine isolante 7 recouvre les fils métalliques 3 sur toute leur longueur.

Lors de l'étape d'obtention d'une deuxième portion de thermocouple 6 non recouverte par la gaine isolante 7, une portion de gaine isolante 7 recouvrant initialement les fils métalliques 3 du thermocouple 2 est retirée sur une longueur correspondant à la deuxième portion de thermocouple 6. Autrement dit, la gaine isolante 7 est dénudée sur cette longueur permettant d'obtenir un thermocouple 2 dénudé tel qu'illustré sur la figure 1.

Le procédé de fabrication comprend également une étape de réduction de l'écartement entre les deux fils métalliques 3 de façon à former dans la deuxième portion de thermocouple 6, une partie d'extrémité rétrécie 9 dans laquelle les deux fils métalliques 3 sont séparés d'une distance d qui est inférieure à la distance D séparant les fils métalliques 3 de la première portion de thermocouple 5.

Cette opération de réduction de l'écartement entre les deux fils métalliques 3 est réalisée par un outillage de pliage.

Le procédé de fabrication comprend également une étape de soudure des deux premières extrémités 4 des fils métalliques 3 formant une soudure chaude pour mesurer une température T1 dans le véhicule automobile. De préférence, la soudure est une soudure laser. Cette étape permet d'obtenir un thermocouple 2 ayant une première extrémité 4 de fils métalliques rétrécie telle qu'illustrée sur la figure 2.

Le procédé de fabrication comprend également une étape de fermeture de la deuxième portion de thermocouple 6 par un capuchon 10 pour protéger la soudure chaude. Le thermocouple 2 obtenu est représenté sur la figure 3.

Le procédé de fermeture de la deuxième portion de thermocouple 6 par un capuchon 10 comprend une étape de soudure du capuchon 10 sur l'enveloppe métallique 17 de la gaine isolante 7.

Plus précisément, c'est la première partie 14 de la deuxième portion 13 du capuchon 10 qui est soudée sur l'enveloppe métallique 17 de la gaine isolante 7.

Cette soudure est de préférence une soudure laser.

Le capuchon 10 est de préférence obtenu par emboutissage.

## Revendications

1. Capteur de température (1) pour véhicule automobile comprenant :
- un thermocouple (2) comportant deux fils métalliques (3) soudés entre eux à une première extrémité (4) formant une soudure chaude pour mesurer une température T1 dans le véhicule automobile, lesdits deux fils métalliques (3) comportant chacun une deuxième extrémité destinée à être connectée électriquement à un dispositif électronique ou un faisceau électrique, et
- une première portion de thermocouple (5) dans laquelle une gaine isolante (7) entoure les fils métalliques (3) du thermocouple (2), les deux fils métalliques (3) de la première portion de thermocouple (5) étant séparés d'une distance D,
- une deuxième portion de thermocouple (6) non recouverte par la gaine isolante (7) s'étendant de la première extrémité (4) des fils métalliques (3) du thermocouple (2) jusqu'à une extrémité avant (8) de la gaine isolante (7) sur une longueur comprise entre 6 mm et 10 mm, ladite deuxième portion de thermocouple (6) comprenant une partie d'extrémité rétrécie (9) dans laquelle les deux fils métalliques (3) de la deuxième portion de thermocouple (6) sont séparés d'une distance d qui est inférieure à la distance D séparant les fils métalliques (3) de la première portion de thermocouple (5), la distance d entre les deux fils métalliques (3) de la deuxième portion de thermocouple (6) est comprise entre 1 mm et 2 mm et
- un capuchon (10) entourant la deuxième portion de thermocouple (6) pour protéger la soudure chaude, comportant :
- une première portion tubulaire (11) entourant la partie d'extrémité rétrécie (9) de la deuxième portion de thermocouple (6) et comprend une première extrémité fermée (12) en regard de la première extrémité (4) des fils métalliques (3) du thermocouple (2),
- une deuxième portion (13) comportant une première partie (14) entourant la gaine isolante (7) reliée perpendiculairement à une deuxième partie (15) faisant butée sur l'extrémité avant (8) de la gaine isolante (7), et
- une troisième portion (16) de forme tronconique reliant la première portion tubulaire (11) à la deuxième partie (15) de la deuxième portion (13), la deuxième partie (15) présentant une forme de disque muni d'un orifice en son centre.

2. Capteur de température (1) selon la revendication 1, dans lequel la partie d'extrémité rétrécie (9) de la deuxième portion de thermocouple (6) s'étend sur une longueur supérieure ou égale à 2 mm.

3. Capteur de température (1) selon la revendication 1, dans lequel la première portion tubulaire (11) du capuchon (10) présente un diamètre d' qui est inférieur au diamètre de la deuxième portion (13) du capuchon (10).

4. Capteur de température (1) selon la revendication 3, **caractérisé en ce que** le diamètre d' de la première portion tubulaire (11) du capuchon (10) est de 2,6 mm, la distance entre les fils métalliques (3) et le capuchon (10) étant supérieure ou égale à 0,5 mm.

5. Procédé de fabrication d'un capteur de température (1) pour véhicule automobile tel que défini par l'une quelconque des revendications 1 à 4, ledit procédé comprenant :
- une étape de fourniture d'un thermocouple (2) comportant deux fils métalliques (3) ayant deux premières extrémités (4), ledit thermocouple (2) comportant une première portion de thermocouple (5) dans laquelle une gaine isolante (7) entoure les fils métalliques (3), les deux fils métalliques (3) étant séparés d'une distance D à l'intérieur de la première portion de thermocouple (5),
- obtention d'une deuxième portion de thermocouple (6) non recouverte par la gaine isolante (7) s'étendant de la première extrémité (4) des fils métalliques (3) du thermocouple (2) jusqu'à une extrémité avant (8) de la gaine isolante (7),
- réduction de l'écartement entre les deux fils métalliques (3) de façon à former, dans la deuxième portion de thermocouple (6), une partie d'extrémité rétrécie (9) dans laquelle les deux fils métalliques (3) sont séparés d'une distance d qui est inférieure à la distance D séparant les fils métalliques (3) de la première portion de thermocouple (5),
- soudure des deux premières extrémités (4) des fils métalliques (3) formant une soudure chaude pour mesurer une température T1 dans le véhicule automobile, et
- fermeture de la deuxième portion de thermocouple (6) par un capuchon (10) pour protéger la soudure chaude.

6. Procédé de fabrication selon la revendication 5, dans lequel, lors de l'étape d'obtention d'une deuxième portion de thermocouple (6) non recouverte par la gaine isolante (7), une portion de gaine isolante (7) recouvrant initialement les fils métalliques (3) du thermocouple (2) est retirée sur une longueur correspondant à la deuxième portion de thermocouple (6).

7. Procédé de fabrication selon l'une quelconque des revendications 5 ou 6, dans lequel la gaine isolante (7) comprenant un coeur minéral (18) entouré d'une enveloppe métallique (17), le procédé de fermeture de la deuxième portion de thermocouple (6) par un capuchon (10) comprend une étape de soudure du capuchon (10) sur l'enveloppe métallique (17) de la gaine isolante (7).

## Patentansprüche

1. Temperatursensor (1) für ein Kraftfahrzeug, umfassend :
- ein Thermoelement (2) mit zwei Metalldrähten (3), die an einem ersten Ende (4) miteinander verschweißt sind, das eine heiße Lötstelle bildet, um eine Temperatur T1 im Kraftfahrzeug zu messen, wobei die beiden Metalldrähte (3) jeweils ein zweites Ende aufweisen, das dazu bestimmt ist, elektrisch mit einer elektronischen Vorrichtung oder einem Kabelbaum verbunden zu werden, und
- einen ersten Thermoelementabschnitt (5), in dem eine Isolierhülle (7) die Metalldrähte (3) des Thermoelements (2) umgibt, wobei die beiden Metalldrähte (3) des ersten Thermoelementabschnitts (5) durch einen Abstand D voneinander getrennt sind,
- einen zweiten Thermoelementabschnitt (6), der nicht von der Isolierhülle (7) bedeckt ist und sich von dem ersten Ende (4) der Metalldrähte (3) des Thermoelements (2) bis zu einem vorderen Ende (8) der Isolierhülle (7) über eine Länge zwischen 6 mm und 10 mm erstreckt, der zweite Thermoelementabschnitt (6) einen verjüngten Endabschnitt (9) umfasst, in dem die beiden Metalldrähte (3) des zweiten Thermoelementabschnitts (6) um einen Abstand d voneinander getrennt sind, der kleiner ist als der Abstand D, der die Metalldrähte (3) des ersten Thermoelementabschnitts (5) voneinander trennt, wobei der Abstand d zwischen den beiden Metalldrähten (3) des zweiten Thermoelementabschnitts (6) zwischen 1 mm und 2 mm liegt, und
- eine Kappe (10), die den zweiten Thermoelementabschnitt (6) umgibt, um das heiße Lot zu schützen, mit :
- einen ersten röhrenförmigen Abschnitt (11), der den verengten Endabschnitt (9) des zweiten Thermoelementabschnitts (6) umgibt und ein erstes geschlossenes Ende (12) umfasst, das dem ersten Ende (4) der Metalldrähte (3) des Thermoelements (2) zugewandt ist,
- einen zweiten Abschnitt (13) mit einem ersten Teil (14), der die Isolierhülle (7) umgibt und senkrecht mit einem zweiten Teil (15) verbunden ist, der an das vordere Ende (8) der Isolierhülle (7) anstößt, und
- einen kegelstumpfförmigen dritten Abschnitt (16), der den ersten rohrförmigen Abschnitt (11) mit dem zweiten Teil (15) des zweiten Abschnitts (13) verbindet,
wobei der zweite Teil (15) die Form einer Scheibe aufweist, die in ihrer Mitte mit einer Öffnung versehen ist.

2. Temperatursensor (1) nach Anspruch 1, wobei sich der verjüngte Endabschnitt (9) des zweiten Thermoelementabschnitts (6) über eine Länge von 2 mm oder mehr erstreckt.

3. Temperatursensor (1) nach Anspruch 1, wobei der erste röhrenförmige Abschnitt (11) der Kappe (10) einen Durchmesser d' aufweist, der kleiner ist als der Durchmesser des zweiten Abschnitts (13) der Kappe (10).

4. Temperatursensor (1) nach Anspruch 3, **dadurch gekennzeichnet, dass** der Durchmesser d' des ersten röhrenförmigen Abschnitts (11) der Kappe (10) 2,6 mm beträgt, wobei der Abstand zwischen den Metalldrähten (3) und der Kappe (10) größer oder gleich 0,5 mm ist.

5. Verfahren zur Herstellung eines Temperatursensors (1) für Kraftfahrzeuge, wie in einem der Ansprüche 1 bis 4 definiert, wobei das Verfahren umfasst:
- einen Schritt des Bereitstellens eines Thermoelements (2) mit zwei Metalldrähten (3) mit zwei ersten Enden (4), wobei das Thermoelement (2) einen ersten Thermoelementabschnitt (5) aufweist, in dem ein Isoliermantel (7) die Metalldrähte (3) umgibt, wobei die beiden Metalldrähte (3) innerhalb des ersten Thermoelementabschnitts (5) um einen Abstand D voneinander getrennt sind,
- Erhalt eines zweiten Thermoelementabschnitts (6), der nicht von der Isolierhülle (7) bedeckt ist und sich von dem ersten Ende (4) der Metalldrähte (3) des Thermoelements (2) bis zu einem vorderen Ende (8) der Isolierhülle (7) erstreckt,
- Verringern des Abstands zwischen den beiden Metalldrähten (3), um im zweiten Thermoelementabschnitt (6) einen verengten Endabschnitt (9) zu bilden, in dem die beiden Metalldrähte (3) um einen Abstand d voneinander getrennt sind, der kleiner ist als der Abstand D, der die Metalldrähte (3) vom ersten Thermoelementabschnitt (5) trennt,
- Löten der beiden ersten Enden (4) der Metalldrähte (3), die eine heiße Lötstelle bilden, um eine Temperatur T1 in dem Kraftfahrzeug zu messen, und
- Verschließen des zweiten Thermoelementabschnitts (6) mit einer Kappe (10), um das heiße Lot zu schützen.

6. Herstellungsverfahren nach Anspruch 5, wobei bei dem Schritt des Erhaltens eines zweiten Thermoelementabschnitts (6), der nicht von der Isolierhülle (7) bedeckt ist, ein Abschnitt der Isolierhülle (7), der ursprünglich die Metalldrähte (3) des Thermoelements (2) bedeckt, über eine Länge entfernt wird, die dem zweiten Thermoelementabschnitt (6) entspricht.

7. Herstellungsverfahren nach einem der Ansprüche 5 oder 6, bei dem, da die Isolierhülle (7) einen mineralischen Kern (18) umfasst, der von einer Metallhülle (17) umgeben ist, das Verfahren zum Verschließen des zweiten Thermoelementabschnitts (6) mit einer Kappe (10) einen Schritt des Anschweißens der Kappe (10) an die Metallhülle (17) der Isolierhülle (7) umfasst.

## Claims

1. Temperature sensor (1) for a motor vehicle comprising :
- a thermocouple (2) comprising two metal wires (3) welded together at a first end (4) forming a hot weld for measuring a temperature T1 in the motor vehicle, said two metal wires (3) each comprising a second end intended to be electrically connected to an electronic device or an electrical harness, and
- a first thermocouple portion (5) in which an insulating sheath (7) surrounds the metal wires (3) of the thermocouple (2), the two metal wires (3) of the first thermocouple portion (5) being separated by a distance D,
- a second thermocouple portion (6) not covered by the insulating sheath (7) extending from the first end (4) of the metal wires (3) of the thermocouple (2) to a front end (8) of the insulating sheath (7) over a length of between 6 mm and 10 mm, the said second thermocouple portion (6) comprising a narrowed end part (9) in which the two metal wires (3) of the second thermocouple portion (6) are separated by a distance d which is less than the distance D separating the metal wires (3) of the first thermocouple portion (5), the distance d between the two metal wires (3) of the second thermocouple portion (6) is between 1 mm and 2 mm, and
- a cap (10) surrounding the second thermocouple portion (6) to protect the hot junction, comprising :
- a first tubular portion (11) surrounding the narrowed end part (9) of the second thermocouple portion (6) and comprising a first closed end (12) facing the first end (4) of the metal wires (3) of the thermocouple (2),
- a second portion (13) comprising a first part (14) surrounding the insulating sheath (7) connected perpendicularly to a second part (15) abutting the front end (8) of the insulating sheath (7), and
- a third portion (16) in the form of a truncated cone connecting the first tubular portion (11) to the second part (15) of the second portion (13),
the second part (15) having the shape of a disc with an orifice at its centre.

2. A temperature sensor (1) as claimed in claim 1, wherein the tapered end part (9) of the second thermocouple portion (6) extends to a length greater than or equal to 2mm.

3. The temperature sensor (1) of claim 1, wherein the first tubular portion (11) of the cap (10) has a diameter d' which is less than the diameter of the second portion (13) of the cap (10).

4. Temperature sensor (1) according to claim 3, **characterized in that** the diameter d' of the first tubular portion (11) of the cap (10) is 2.6 mm, the distance between the metal wires (3) and the cap (10) being greater than or equal to 0.5 mm.

5. A method of manufacturing a temperature sensor (1) for a motor vehicle as defined by any one of claims 1 to 4, said method comprising:
- a step of providing a thermocouple (2) comprising two metal wires (3) having two first ends (4), said thermocouple (2) comprising a first thermocouple portion (5) in which an insulating sheath (7) surrounds the metal wires (3), the two metal wires (3) being separated by a distance D within the first thermocouple portion (5),
- obtaining a second thermocouple portion (6) not covered by the insulating sheath (7) extending from the first end (4) of the metal wires (3) of the thermocouple (2) to a front end (8) of the insulating sheath (7),
- reducing the spacing between the two metal wires (3) so as to form, in the second thermocouple portion (6), a narrowed end part (9) in which the two metal wires (3) are separated by a distance d which is less than the distance D separating the metal wires (3) from the first thermocouple portion (5),
- welding of the first two ends (4) of the metal wires (3) forming a hot weld for measuring a temperature T1 in the motor vehicle, and
- closing the second thermocouple portion (6) with a cap (10) to protect the hot weld.

6. Manufacturing method according to claim 5, in which, during the step of obtaining a second thermocouple portion (6) not covered by the insulating sheath (7), a portion of insulating sheath (7) initially covering the metal wires (3) of the thermocouple (2) is removed over a length corresponding to the second thermocouple portion (6).

7. Manufacturing method according to any one of claims 5 or 6, in which, the insulating sheath (7) comprising a mineral core (18) surrounded by a metal envelope (17), the method of closing the second thermocouple portion (6) with a cap (10) comprises a step of welding the cap (10) to the metal envelope (17) of the insulating sheath (7).
